# EUROPEAN PATENT APPLICATION

(11) **EP 3 109 857 A1**
(43) Date of publication of application: **28.12.2016**
(21) Application number: 16174278.8
(22) Date of filing: 13.06.2016
(51) Int. Cl.: G10L 15/22, G08G 5/00, G10L 15/26

(54) **SYSTEM AND METHOD FOR AIRCRAFT VOICE-TO-TEXT COMMUNICATION WITH MESSAGE VALIDATION**

(30) Priority: 24.06.2015 US 201514749090
(71) Applicant: Honeywell International Inc., Morris Plains, NJ 07950 (US)
(72) Inventor: JOSHI, Shrinath, Morris Plains, NJ New Jersey 07950 (US); RAVINDRANATH, Balasubramanyam, Morris Plains, NJ New Jersey 07950 (US); RODNEY, Timothy Lee, Morris Plains, NJ New Jersey 07950 (US)
(74) Representative: Houghton, Mark Phillip

(57) **Abstract**

The embodiments described herein can provide improved reliability and accuracy of communication to and from and aircraft, such as aircraft-to-aircraft communication and aircraft-to-air traffic control (ATC) communication. In particular, the systems and methods can improve the reliability and accuracy of aircraft communication by performing voice-to-text conversions on voice communications and performing a validation check on the resulting voice-to-text converted message. This validation check determines a measure of validation for the voice-to-text converted message. In one embodiment, the voice-to-text converted message can be displayed to a user with a visual indicator of the measure of validation. Thus, the user can be made aware of the measure of validation when viewing the voice-to-text converted message. Such a system and method can be used to provide the user with increased information regarding the reliability and accuracy of the voice-to-text converted message, and thus can provide improved communication to and from the aircraft.

## Description

### TECHNICAL FIELD

Embodiments disclosed herein relate generally to communication systems, more particularly, to aircraft communications systems and methods.

### BACKGROUND

Dependable communication to and from aircraft is of great importance to the reliability and efficiency of modern air travel. This includes verbal communication between aircraft, and between aircraft and air traffic control (ATC). Such verbal communication can be used to deliver important information and instruction to aircraft. For example, verbal communication can be used to deliver important navigation instruction from ATC to the aircraft.

Aircraft commonly operate in a global environment where one or more of the parties must communicate in a language that is not their primary or native language. In such situations one or more of the speakers may have difficulty properly articulating their words, and that can be particularly problematic for non-native speaking listeners. Additionally, other factors, including the distance and weather can impact the accuracy of the verbal communication. In such cases, the accuracy of the verbal communication to and from the aircraft can be negatively impacted.

Thus, there remains a continuing need for improvements in aircraft communication, and it is desirable to provide a system and method for improved aircraft communication.

### BRIEF SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

In one embodiment an aircraft communication system is provided that comprises: a voice-to-text converter configured to convert received wireless voice communications regarding an aircraft into a plurality of text messages; and a converted message validator, the converted message validator configured to analyze each of the plurality of text messages to determine a measure of validation for each of the plurality of text messages.

In another embodiment an aircraft communication system is provided that comprises: a receiver configured to receive wireless voice communications regarding an aircraft; a transmitter configured to transmit wireless voice communications regarding an aircraft; a voice-to-text converter coupled to the receiver and the transmitter, the voice-to-text converter configured to convert the received wireless voice communications into a first plurality of text messages and convert the transmitted wireless voice communications into a second plurality of text messages; a converted message validator, the converted message validator configured to analyze each of the first and second plurality of text messages to determine a measure of validation for each of the first and second plurality of text messages; and a message display driver, the message display driver configured to display the plurality of text messages the plurality of text messages on a display screen.

In another embodiment a method is provided that comprises: converting received voice communications regarding an aircraft into a plurality of voice-to-text converted messages; analyzing each of the plurality of voice-to-text converted messages to determine a measure of validation for each of the plurality of voice-to-text converted messages; and displaying the plurality of voice-to-text converted messages on a display screen along with an indication of a corresponding measure of validation for each of the plurality of voice-to-text converted messages.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a schematic diagram of an aircraft communication system in accordance with an exemplary embodiment;
FIG. 2 is a flow diagram of a communication method accordance with an exemplary embodiment;
FIG. 3 is a schematic diagram of an aircraft communication system in accordance with another exemplary embodiment;
FIG. 4 is a schematic diagram of a display screen in accordance with an exemplary embodiment; and
FIG. 5 is a schematic diagram of a processing system 500 in accordance with an exemplary embodiment.

### DETAILED DESCRIPTION

The embodiments described herein provide systems and methods for aircraft communication. The systems and methods can improve the reliability and accuracy of communication to and from and aircraft, such as aircraft-to-aircraft communication and aircraft-to-air traffic control (ATC) communication.

In particular, the systems and methods can improve the reliability and accuracy of aircraft communication by performing voice-to-text conversions on voice communications and performing a validation check on the resulting voice-to-text converted message. This validation check determines a measure of validation for the voice-to-text converted message. In one embodiment, the voice-to-text converted message can be displayed to a user with a visual indicator of the measure of validation. Thus, the user can be made aware of the measure of validation when viewing the voice-to-text converted message. Such a system and method can be used to provide the user with increased information regarding the reliability and accuracy of the voice-to-text converted message, and thus can provide improved communication to and from the aircraft.

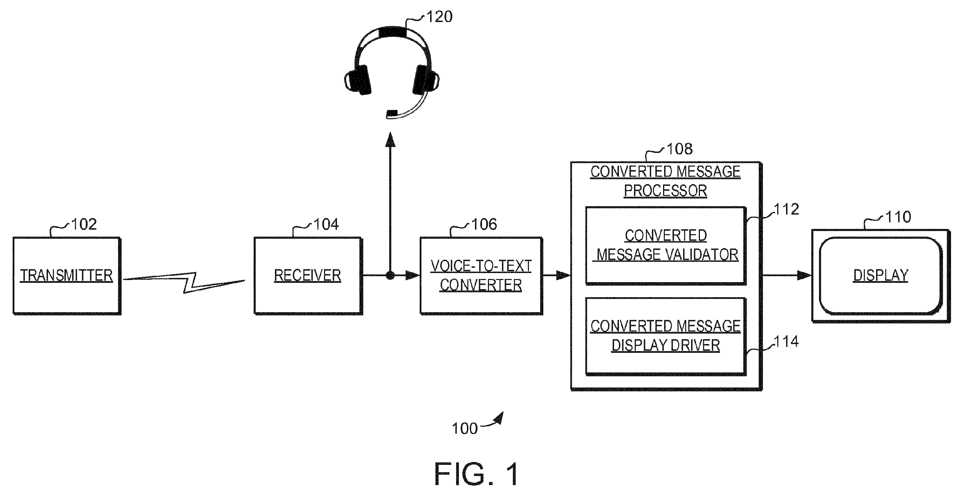

Turning now to FIG. 1, an exemplary aircraft communication system 100 is illustrated. The aircraft communication system 100 includes a receiver 104, a voice-to-text converter 106, a converted message processor 108, and a display 110. It should be noted that the aircraft communication system 100 is a simplified representation of such a communication system that would typically include many more elements. Furthermore, it should be noted that the aircraft communication system 100 could be implemented on an aircraft to provide communication to that aircraft. However, it could also be implemented as part of a ground based air traffic control communication system.

In general, the receiver 104 receives transmissions from the transmitter 102. Again, the receiver 104 could be implemented on an aircraft, while the transmitter 102 is implemented with ground based air traffic control. Alternatively, the receiver 104 could be implemented with ground based air traffic control, while the transmitter 102 is implemented on an aircraft. Alternatively, the transmitter 102 and receiver 104 could be on different aircraft to facilitate aircraft-to-aircraft communication.

The receiver 104 passes received communication signals to the user, as indicated by headset 120. The headset could be a pilot/co-pilot headset, or it could be a headset used by ground control. The received communication signals include voice communications regarding the aircraft. Thus, the traditional voice communication path between pilots and/or ground control is provided. In accordance with the embodiments described herein, the receiver 104 also passes received communication signals to the voice-to-text converter 106. In general, the voice-to-text converter 106 is configured to convert the received voice communications regarding the aircraft into one or more voice-to-text converted messages. The voice-to-text converter 106 can use any suitable technique for performing such a conversion.

In accordance with the embodiments described herein, the voice-to-text converted messages are passed to the converted message processor 108. The converted message processor 108 includes a converted message validator 112 and a converted message display driver 114. In general, the converted message validator 112 is configured to analyze the voice-to-text converted messages to determine a measure of validation for each of the voice-to-text converted messages. As will be described in greater detail below, a variety of techniques can be used to determine the measure of validation for the voice-to-text converted messages.

The converted message display driver 114 is configured to facilitate the display of the voice-to-text converted messages on a display screen. For example, by providing a user interface output in the form of a sorted list of voice-to-text converted messages. Additionally, the converted message display driver can be configured to display an indication of the determined measure of validation with the displayed messages. Thus, the user can be made aware of the measure of validation when viewing the voice-to-text converted message on the display screen.

As mentioned above, a variety of techniques can be used to determine the measure of validation for voice-to-text converted messages. As one example, the converted message validator 112 can be configured to analyze each of the plurality of voice-to-text converted messages to determine if one or more key words are present in a voice-to-text converted message, and to identify such keywords that are found. With the one or more keywords in the message identified, the voice-to-text converted message can be analyzed to see if one or more corresponding subordinate words and/or subordinate values are also in the voice-to-text converted message. Additionally, the converted message validator 112 can be configured to determine if identified subordinate values are consistent with the identified keywords. Examples of how such techniques can be implemented will be presented in greater detail below.

As another example, the converted message validator 112 can be configured to determine a measure of validation by comparing voice-to-text converted messages to a phraseology dataset. For example, the voice-to-text converted messages can be compared to standardized phrases derived from the International Civil Aviation Organization (ICAO) defined phraseologies. The results of such a comparison can then be used to determine the measure of validation. In other examples the phraseology dataset can be derived, at least in part, based on self-learning techniques. Examples of how such techniques can be implemented will be presented in greater detail below.

As another example, the converted message validator 112 can be configured to determine a measure of validation by determining if read back is appropriate based on the content of the voice-to-text converted message. In such an implementation, a corresponding voice-to-text converted read back message can be located and compared to the original voice-to-text converted message. Examples of how such techniques can be implemented will be presented in greater detail below.

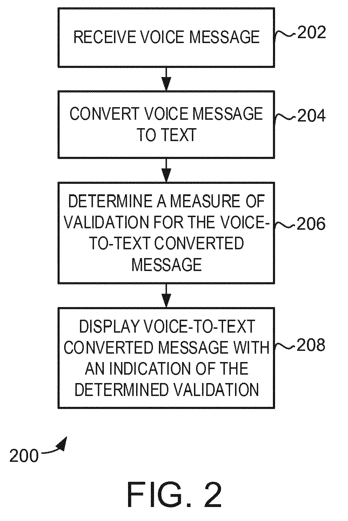

Turning now to FIG. 2, a method 200 for processing voice messages is illustrated. The first step 202 is to receive a voice message. Such a voice message could be transmitted using any suitable transmission technique and protocol. Furthermore, such a voice message can be received by any suitable receiver on an aircraft or at an air traffic control facility. Furthermore, upon receipt the voice message can be recorded and processed using any combination of suitable techniques that can provide the received voice messages in a format suitable for a voice-to-text conversion.

The next step 204 is to convert the voice message to text. Again, any suitable technique can be used to convert the received voice message to text.

The next step 206 is to determine a measure of validation for the voice-to-text converted message. In step 206 a variety of techniques can be used to determine the measure of validation for the voice-to-text converted messages. As was described above, such a determination can be based on locating and identifying one or more keywords in the text, a comparison to a phraseology dataset, and/or comparisons with corresponding read back messages.

The next step 208 is to display the voice-to-text converted message with an indication of the determined validation. This can be done with any suitable display technique, and the message can be displayed on any suitable display on the aircraft. Thus, the user can be made aware of the measure of validation when viewing the voice-to-text converted message on the display screen.

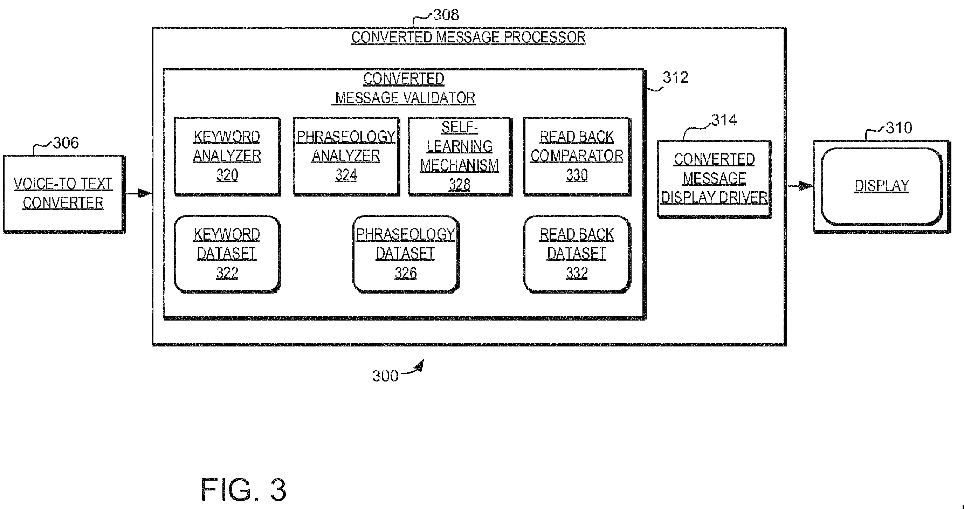

Turning now to FIG. 3, a second exemplary aircraft communication system 300 is illustrated. The aircraft communication system 300 includes a voice-to-text converter 306, a converted message processor 308, and a display 310. In general, the voice-to-text converter 306 is configured to convert received voice communications received at an aircraft into one or more voice-to-text converted messages. The voice-to-text converter 306 can again use any suitable technique for performing such a conversion.

In accordance with the embodiments described herein, the voice-to-text converted messages are passed to the converted message processor 308. The converted message processor 308 includes a converted message validator 312 and a converted message display driver 314.

In general, the converted message display driver 314 is configured to facilitate the display of the voice-to-text converted messages on a display screen. For example, by providing a user interface output in the form of a sorted list of voice-to-text converted messages. Additionally, the converted message display driver 314 can be configured to display an indication of the determined measure of validation with the displayed messages.

In general, the converted message validator 312 is configured to analyze the voice-to-text converted messages to determine one or more measures of validation for each of the voice-to-text converted messages. In this illustrated embodiment, the converted message validator 312 includes a key word analyzer 320, a keyword dataset 322, a phraseology analyzer 324, a phraseology dataset 326, a self-learning mechanism 328, a read back comparator 330, and a read back dataset 332. In general, these elements in the converted message validator 312 are provided to generate one or more measures of validation for each received voice-to-text converted message.

In this example of FIG. 3 the keyword analyzer 320 and keyword dataset 322 can be configured to analyze each of the plurality of voice-to-text converted messages to determine if one or more key words are present in a voice-to-text converted message, and to identify such keywords that are found. With the one or more keywords in the message identified, the voice-to-text converted message can be analyzed to see if one or more corresponding subordinate words and/or subordinate values are also in the voice-to-text converted message. Additionally, the converted message validator 312 can be configured to determine if identified subordinate values are consistent with the identified keywords.

To accomplish this the keyword dataset 322 would be populated with a selected set of keywords found in aircraft related communications, and would link those keywords with corresponding subordinate keywords and subordinate values that relate to and are expected to be also found in messages that contain the keywords. Thus, the keyword analyzer 320 can parse individual words in a voice-to-text converted message, compare the parsed words to the keywords in the keyword dataset 322. When one or more keywords is located in the voice-to-text converted message, the keyword dataset 322 can be used to determine if any subordinate keywords or subordinate values are expected for the located keyword, and the voice-to-text converted message can be analyzed to determine if the expected subordinate keywords and values were also present in the message. A voice-to-text converted message that includes the expected subordinate keywords and/or values can be assigned a higher measure of validation compared to a voice-to-text converted message that does not contain expected subordinate keywords and/or values, as it can be assumed that the message is incomplete if it does not contain the expected subordinate keywords and values. Additionally, in some cases it may be appropriate to require that the subordinate keyword or value be adjacent to the keyword for validity.

A variety of different types of keywords can be used. Examples of the types of words that can be used as keywords include: operational commands, call signs, communication commands, and clearance commands. In the case of operational commands, these are words that indicate specific commands or directions from air traffic control. For example, operational command keywords can be words that command a change in altitude, speed, heading, etc.

In the case of call signs, these are words that indicate a specific aircraft. Every voice message from ground control should contain a call sign, as call signs are used by the pilot to determine whether the command pertains to their aircraft. Call signs can thus be used as keywords in determining a measure of validation.

In the case of communication commands, these are words that indicate specific communication commands or directions from air traffic control. For example, commands to monitor a particular frequency. In this case, the word monitor or the word frequency could be used as keywords. In the case of clearance commands, these are words that act as constraints. For example, the keywords can be in the form of clearances, speed/altitude changes, offset requests, route changes, etc.

As one specific example, assume voice-to-text converted message is as follows:
"FASTAIR 345 AFTER PASSING NORTH CROSS NDB DESCEND TO FL 80"

In such a message, the words "AFTER PASSING" and "DESCEND" can be identified by the keyword analyzer 320 as keywords. As the "AFTER PASSING" would be expected to be coupled to a corresponding location, the keyword analyzer 320 would parse the message and identify "NORTH CROSS" as a subordinate keyword to "AFTER PASSING". Likewise, as the term "DESCEND" would be expected to be coupled to a corresponding flight level, the keyword analyzer 320 would parse the message and identify "FL 80" as a subordinate value to "DESCEND". In both cases the presence of the appropriate subordinate keyword/value to the keywords can be used as the positive indication of message validity. Conversely, if an appropriate subordinate keyword or value was not found, this would be negative indication of message validity.

Additionally, the keyword analyzer 320 can be configured to determine if identified subordinate values are consistent with the identified keywords. As one example, the keyword analyzer 320 can be configured to compare the identified subordinate values with a range of expected values to determine if the identified subordinate value is within the expected range. Using the example above, the keyword analyzer 320 can determine if the subordinate value "FL 80" is within the expected range. The subordinate value being within the expected range can be used as a positive indication of message validity. Conversely, the subordinate value being outside the expected range can be used as a negative indication of message validity. To determine if the value is within an expected range the converted message validator 312 may be configured to interface with other systems on the aircraft. For example, the converted message validator 312 may be configured to interface with the FMS to obtain information such as location, current heading, altitude, speed, etc. Such information can then be used to determine if the value is within the expected range.

It should also be noted in identifying keywords the keyword analyzer 320 can also be configured to identify call signs, and specifically to identify messages that contain call signs identifying specific aircraft. In such an embodiment the keyword analyzer 320 can be used to identify messages specifically directed to the aircraft containing the keyword analyzer 320. Such messages can then be considered to have an increased measure of validation. Furthermore, such messages can then be highlighted or otherwise presented more prominently on the display.

In this example of FIG. 3, the phraseology analyzer 324 and phraseology dataset 326 can be configured to determine a measure of validation by comparing received voice-to-text converted messages to phraseologies defined in the phraseology dataset 326. The phraseology dataset 326 can be populated with a set standardized phrases derived from a variety of sources. For example, the phraseology dataset 326 can be implemented to include phrases defined in the Manual of Radiotelephony, published by the International Civil Aviation Organization (ICAO). This manual defines a consistent set of phrases and terminology designed to facilitate reliable aircraft communications. In some cases it may be desirable to combine data from multiple sources into the phraseology dataset 326. For example, in some cases it may be desirable to include regional variations to the standard terminology to the phraseology dataset 326. For example, various countries publish their own versions of the *Manual of Radiotelephony* that includes variations on the standard database, and those variations can be incorporated into the phraseology dataset 326. In cases where regional variations are added to the phraseology dataset 326, it may be desirable to use those regional variations only when the aircraft is in the corresponding region. So implemented the phraseology dataset 326 can provide data tailored to the current location of the aircraft.

In the example of FIG. 3, the self-learning mechanism 328 can also be configured to contribute to the phraseology dataset 326. In such an implementation the self-learning mechanism 328 can identify variations to the standard phraseology that are being used over time, and can add those variations to the phraseology dataset 326. For example, the self-learning mechanism 328 can be implemented to store voice-to-text converted messages as they are received, and analyze the messages received over time to determine when certain phrases are becoming more commonly used, and thus are more likely to be valid. Such self-learning can be used to identify new trends in phraseology, and can also be used to identify local variations in phraseology.

In one embodiment, the self-learning mechanism 328 can be configured to determine if all words in the incoming message match words in a phrase in the standard phraseology (in any order). If instead only partial words only match, then the self-learning mechanism 328 could determine if the incoming phrase is a variation to existing standard phraseology. If instead again, all words don't match then the self-learning mechanism 328 could determine that the incoming phrase is a new phrase. In that case, the self-learning mechanism 328 can be configured to keep a track of various dialects/variations to existing phrases, such that the mechanism can decide when new phrases are being used.

When the phraseology dataset 326 is so provided, the phraseology analyzer 324 can compare voice-to-text converted messages to those phrases found in the phraseology dataset 326. Those messages that are consistent with the phraseology in the phraseology dataset 326 can be considered to have an increased measure of validation.

Conversely, those messages that are less consistent with the phraseology can be considered to have a reduced measure of validation. In this case, one or more keywords and values may be present, but the order may not exactly match the defined phraseology. For example, if the phrase: "FASTAIR 345 AFTER PASSING NORTH CROSS NDB DESCEND TO FL 80" is in the standard phraseology set, then "FASTAIR 345 DESCEND TO FL 80 AFTER PASSING NORTH CROSS NDB" is identical in intent, even though the phraseology is different. In this case, the second phrase could be determined to be at least partially valid even if the phraseology does not match the preferred phraseology. In contrast, the phrase: "FASTAIR 345 AFTER PASSING FL80 DESCEND TO NORTH CROSS NDB" could be determined to fail validation because the word and value pair are jumbled and the intent is much less clear.

In this example of FIG. 3, the read back comparator 330 and read back dataset 332 can be configured to determine a measure of validation by determining if read back of a message was required and comparing the read back message to the original. In general, the ICAO and other such organizations define certain types of messages as requiring read back by the pilot and/or air traffic control. These are typically messages that are more critical to the safe operation of the aircraft. For example, messages from air traffic control regarding route clearance and instructions to enter, land and take off are generally required to be read back by the pilot. The read back of a message is generally intended to be identical to the original message, except that the call sign of the aircraft is read at the end of the read back message instead of at the front as it was in the original message. In this illustrated embodiment the read back comparator 330 and read back database 332 can be implemented to use these required read backs to determine a measure of validation for the voice-to-text conversion of the original message.

In one embodiment, the read back comparator 330 can be implemented to determine if read back occurred based on the content of the voice-to-text converted message. For example, by determining if the message was a type of message for which read back is required. This can be accomplished by identifying words in the message that indicate that such a message is required to be read back. A database of subsequently occurring voice-to-text converted messages can then be analyzed to determine if one of the messages in the database was the required read back of the original message. In other embodiments the read back comparator 330 can be implemented to check all voice-to-text converted messages for a subsequent read back.

With the voice-to-text converted read back message located, the read back comparator 330 can perform a comparison between the original voice-to-text converted message and the voice-to-text converted read back message in a variety of ways. For example, the read back comparator 330 can parse both messages for certain keywords and make a comparison of the located keywords to determine a measure of the validation. In that embodiment, if the same keywords are located in both messages the measure of validation can be determined to be relatively high. If instead, one or more keywords are missing from either message the measure of validation can be determined to be relatively low.

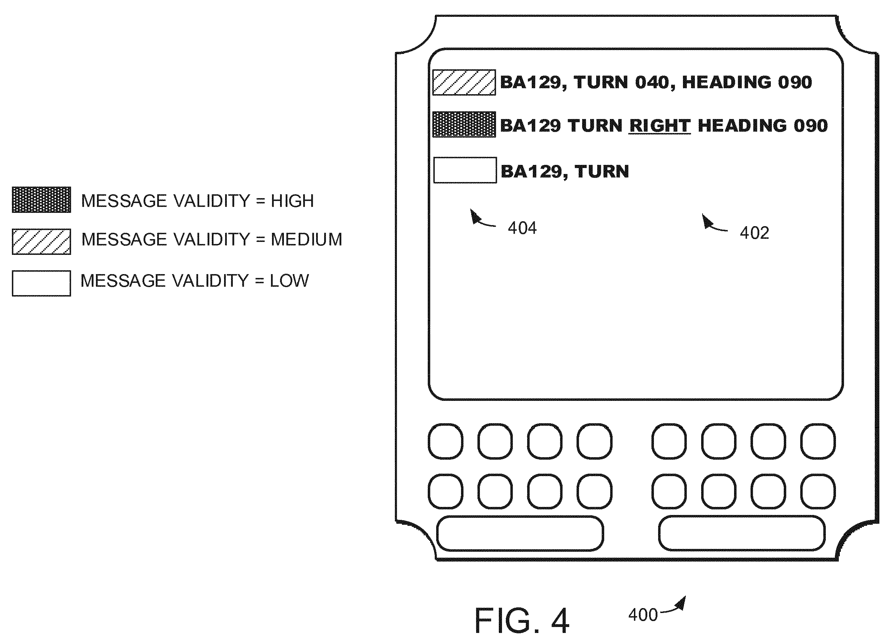

Turning now to FIG. 4, an exemplary display screen 400 is illustrated. The display screen 400 is configured to display voice-to-text converted messages 402 to a user of the system, e.g., a pilot. In this illustrated example, the display screen 400 is part of a flight management system (FMS) display, but this is just one example implementation. As another example, in some cases it may be desirable to display voice-to-text converted messages on a display screen dedicated to that purpose. In other cases it may be desirable to use a multifunction display screen to display the voice-to-text converted messages periodically.

As illustrated in FIG. 4, the display screen 400 is configured to display multiple voice-to-text converted messages simultaneously in the form of a list of such messages. In such an implementation the system can be configured to display the multiple messages in various different graphical configurations and orders. For example, the messages can be ordered on the display screen 400 based on time of receipt, sender, importance, determined measure of validation, or some other factor. Additionally, in some embodiments it may be desirable to display only messages that include the call sign for the corresponding aircraft, or alternatively, to display such messages first or otherwise more prominently than messages for other aircraft. Furthermore, in some implementations the display screen 400 could be configured to allow the user to select and/or change the order or other arrangement of the displayed messages.

In this illustrated embodiment, the voice-to-text converted messages 402 are each displayed with visual indictor 404 of a corresponding determined measure of validation. In this illustrated embodiment, the visual indictors 404 comprise graphical elements adjacent to the corresponding voice-to-text converted message 402. However, this is just one illustrated example and in other implementations other visual indicators 404 can be used. For example, the validation of messages could be indicated by bolding, underlining, font sizing, coloring, shading and/or highlighting various messages. As other examples the validation of messages could be indicated by color or brightness.

In the example illustrated in FIG. 4, the message "BA129 TURN RIGHT HEADING 090" is displayed with an indication of high message validity, as all the keywords are in the phraseology and the values are consistent with keywords. Conversely, the message "BA129 TURN 040 HEADING 090" is displayed with an indication of medium message validity, as all the keywords are in phraseology, but "Turn 40" is not a value appropriate for the keyword. Finally, the message "BA129 TURN" is displayed with an indication of low message validity, as the either a value is missing or the word "TURN" is a keyword is not yet in the standard phraseology.

The keywords that are important and/or prone to misinterpretation can also be highlighted or otherwise emphasized to provide additional clarity. For example, in the message "BA129 TURN RIGHT, HEADING 090", the word "RIGHT" could be emphasized to decrease the chance the crew make a mistake and turn LEFT instead. In this case, holding, underlining, font sizing, coloring, shading and/or highlighting could be used to emphasize such words. As other examples, the validation could be indicated by the order or other arrangement of the messages on the display screen 400. Finally, in some embodiments only messages above a defined level of validation may be displayed. In each of these cases the display screen 400 is configured to display the voice-to-text converted messages along with a corresponding determined measure of validation.

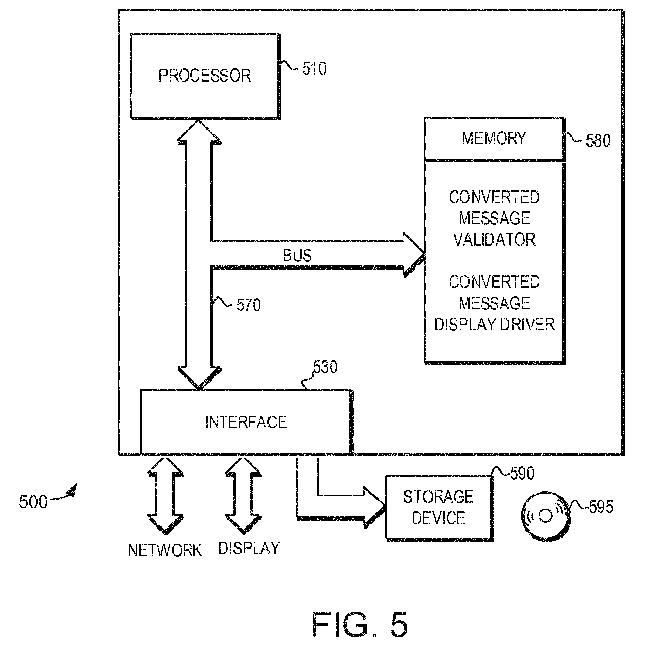

The converted message validator and converted message display driver can be implemented on a wide variety of platforms. Turning now to FIG. 5, an exemplary processing system 500 is illustrated. Processing system 500 illustrates the general features of a processing system that can be used to implement the invention. Of course, these features are merely exemplary, and it should be understood that the invention can be implemented using different types of hardware that can include more or different features. It should be noted that the processing system 500 can be implemented in many different environments, such as onboard an aircraft to provide communication to and from the aircraft, or on the ground to provide communication with ground control. The exemplary processing system 500 includes a processor 510, an interface 530, a storage device 590, a bus 570 and a memory 580. In accordance with the embodiments of the invention, the memory 580 includes a converted message processing program that includes a converted message validator and a converted message display driver.

The processor 510 performs the computation and control functions of the system 500. The processor 510 may comprise any type of processor, include single integrated circuits such as a microprocessor, or may comprise any suitable number of integrated circuit devices and/or circuit boards working in cooperation to accomplish the functions of a processing unit. In addition, processor 510 may comprise multiple processors implemented on separate systems. In addition, the processor 510 may be part of an overall vehicle control, navigation, avionics, communication or diagnostic system. During operation, the processor 510 executes the programs contained within memory 580 and as such, controls the general operation of the processing system 500.

Memory 580 can be any type of suitable memory. This would include the various types of dynamic random access memory (DRAM) such as SDRAM, the various types of static RAM (SRAM), and the various types of non-volatile memory (PROM, EPROM, and flash). It should be understood that memory 580 may be a single type of memory component, or it may be composed of many different types of memory components. In addition, the memory 580 and the processor 510 may be distributed across several different physical devices that collectively processing system 500. For example, a portion of memory 580 may reside on the vehicle communication system computer, and another portion may reside on vehicle flight management system computer.

The bus 570 serves to transmit programs, data, status and other information or signals between the various components of processing system 500. The bus 570 can be any suitable physical or logical means of connecting computer systems and components. This includes, but is not limited to, direct hard-wired connections, fiber optics, infrared and wireless bus technologies. It should also be noted that the processing system 500 could be implemented as a single system on a chip (SoC). In such a case the bus 570 can comprise the internal bus of the SoC.

The interface 530 allows communication to the processing system 500, and can be implemented using any suitable method and apparatus. It can include a network interfaces to communicate to other systems, terminal interfaces to communicate with technicians, and storage interfaces to connect to storage apparatuses such as storage device 590. Storage device 590 can be any suitable type of storage apparatus, including direct access storage devices such as hard disk drives, flash systems, floppy disk drives and optical disk drives. As shown in FIG. 5, storage device 590 can comprise a disc drive device that uses discs 595 to store data.

In accordance with the embodiments described herein, the processing system 500 includes a converted message processing program that includes converted message validator and converted message display driver. In other embodiments the processing system could also include a voice-to-text converter. Thus during operation, these program elements are stored in the memory 580 and executed by processor 510. When being executed by the processor 510, these programs perform voice-to-text conversions on voice communications and perform a validation check on the resulting voice-to-text converted message. This validation check determines a measure of validation for the voice-to-text converted message. The voice-to-text converted message can then be displayed to a user with a visual indicator of the measure of validation.

It should be understood that while the present invention is described here in the context of a fully functioning computer system, those skilled in the art will recognize that the mechanisms of the present invention are capable of being distributed as a program product in a variety of forms, and that the embodiments described herein apply equally regardless of the particular type of recordable media used to carry out the distribution. Examples of recordable media include: magnetic disks, flash memory devices, hard drives, memory cards and optical disks (e.g., disk 195).

The foregoing description of specific embodiments reveals the general nature of the inventive subject matter sufficiently that others can, by applying current knowledge, readily modify and/or adapt it for various applications without departing from the general concept. Therefore, such adaptations and modifications are within the meaning and range of equivalents of the disclosed embodiments. The inventive subject matter embraces all such alternatives, modifications, equivalents, and variations as fall within the spirit and broad scope of the appended claims.

The forgoing detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques related to aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter. Although not always required, the techniques and technologies described here are suitable for use by any aircraft, ground control system, or other communication system.

## Claims

1. An aircraft communication system, comprising:
a processor;
a memory coupled to the processor;
an converted message processing program residing in the memory and being executed by the processor, the converted message processing program including:
a voice-to-text converter configured to convert received voice communications regarding an aircraft into a plurality of voice-to-text converted messages; and
a converted message validator, the converted message validator configured to analyze each of the plurality of voice-to-text converted messages to determine a measure of validation for each of the plurality of voice-to-text converted messages.

2. The system of claim 1, wherein the converted message validator is configured to analyze each of the plurality of voice-to-text converted messages to determine a measure of validation by identifying a keyword in a voice-to-text converted message and checking for a presence of at least one corresponding subordinate word to the identified keyword in the voice-to-text converted message.

3. The system of claim 1, wherein the converted message validator is configured to analyze each of the plurality of voice-to-text converted messages to determine a measure of validation by identifying a keyword in a voice-to-text converted message and checking for a presence of a corresponding subordinate value to the identified keyword in the voice-to-text converted message.

4. The system of claim 3, wherein the converted message validator is further configured to determine if the corresponding at least one subordinate value is consistent with the identified keyword.

5. The system of claim 1, wherein the converted message validator is configured to analyze each of the plurality of voice-to-text converted messages to determine a measure of validation by comparing the voice-to-text converted message to a phraseology dataset.

6. The system of claim 1, wherein the converted message validator is configured to analyze each of the plurality of voice-to-text converted messages to determine a measure of validation by determining if read back is appropriate for the voice-to-text converted message, and comparing the voice-to-text converted message to the voice-to-text converted read back message.

7. The system of claim 1, wherein the converted message processing program further comprises a message display driver, the message display driver configured to display the plurality of voice-to-text converted messages on a display screen.

8. The system of claim 7, wherein the message display driver is configured to display an indication of determined validity for each of the plurality of voice-to-text converted messages on a display screen.

9. A method of aircraft communication, comprising:
converting received voice communications regarding an aircraft into a plurality of voice-to-text converted messages;
analyzing each of the plurality of voice-to-text converted messages to determine a measure of validation for each of the plurality of voice-to-text converted messages; and
displaying the plurality of voice-to-text converted messages on a display screen along with an indication of a corresponding measure of validation for each of the plurality of voice-to-text converted messages.

10. The method of claim 9, wherein the step of analyzing each of the plurality of voice-to-text converted messages to determine the measure of validation for each of the plurality of voice-to-text converted messages comprises identifying a keyword in the voice-to-text converted message and checking for a presence of at least one corresponding subordinate word to the identified keyword in the voice-to-text converted message.

11. The method of claim 9, wherein the step of analyzing each of the plurality of voice-to-text converted messages to determine the measure of validation for each of the plurality of voice-to-text converted messages comprises identifying a keyword in the voice-to-text converted message and checking for a presence of a corresponding subordinate value to the identified keyword in the voice-to-text converted message.

12. The method of claim 11, wherein the step of analyzing each of the plurality of voice-to-text converted messages to determine the measure of validation for each of the plurality of voice-to-text converted messages further comprises determining if the subordinate value is consistent with the identified keyword.

13. The method of claim 9, wherein the step of analyzing each of the plurality of voice-to-text converted messages to determine the measure of validation for each of the plurality of voice-to-text converted messages comprises comparing the voice-to-text converted message to a phraseology dataset.

14. The method of claim 9, wherein the step of analyzing each of the plurality of voice-to-text converted messages to determine the measure of validation for each of the plurality of voice-to-text converted messages comprises determining if read back is appropriate for the voice-to-text converted message, and comparing the voice-to-text converted message to the voice-to-text converted read back message.
